# EUROPÄISCHE PATENTANMELDUNG

(11) **EP 3 266 605 A1**
(43) Veröffentlichungstag der Anmeldung: **10.01.2018**
(21) Anmeldenummer: 17159091.2
(22) Anmeldetag: 03.03.2017
(51) Int. Cl.: B32B 5/18, B28B 19/00, E04C 2/20, E04C 2/22, E04C 2/284

(54) **BAUPLATTE MIT ARMIERUNGSGEWEBE UND VERFAHREN ZU DEREN HERSTELLUNG**

(30) Priorität: 05.07.2016 DE 202016004149 U
(71) Anmelder: Mostafa, Kamal, Giza (EG); Lietz, Uwe, 13156 Berlin (DE)
(72) Erfinder: Mostafa, Kamal, Giza (EG); Lietz, Uwe, 13156 Berlin (DE)
(74) Vertreter: Eisenführ Speiser

(57) **Zusammenfassung**

Bei einer Bauplatte umfassend einen Plattenkörper (2) mit einem Kern aus einem aufgeschäumten Material mit einer flächigen Vorderseite (6) und einer der Vorderseite gegenüberliegenden flächigen Rückseite und mindestens ein auf mindestens eine der Vorder- bzw. Rückseite des Plattenkörpers (2) aufgeklebtes Armierungsgewebe (3) sind die Gewebefäden (4) der Armierung (3) nur an der unmittelbaren Kontaktfläche (5) der Fäden (4) mit der Oberfläche (6) des Plattenkörpers (2) mittels eines geeigneten Haftklebers (7) verbunden. Die verbleibenden Flächenbereiche (8) des Gewebefadens (4), die keinen Kontakt zur Oberfläche (6) des Plattenkörpers (2) haben, sind frei von Haftkleber, um die gewünschte Strukturierung der Bauplattenoberfläche zu erreichen. Alternativ sind die Flächnbereiche (8) der Gewebefäden (4), die keinen Kontakt zur OBerfläche (6) des Plattenkörpers (2) haben, mit einer Haftkleberschicht (11) überzogen.

## Beschreibung

Die Erfindung bezieht sich auf eine Bauplatte, umfassend einen Plattenkörper mit zumindest einem Kern aus einem aufgeschäumten Material mit einer flächigen Vorderseite und einer der Vorderseite gegenüberliegenden flächigen Rückseite und mindestens ein auf mindestens einer der Oberflächen von Vorder- bzw. Rückseite des Plattenkörpers aufgeklebtes Armierungsgewebe.

### Stand der Technik

Grundsätzlich sind derartige Bauplatten in unterschiedlichen Formen und Varianten seit geraumer Zeit bekannt. Dabei besteht der Kern in der Regel aus einem aufgeschäumten Kunststoff, wie Polystyrol oder Polyurethanschaum, auf den eine Beschichtung auf Zement- oder Polymerbasis mit eingebettetem Flächengewebe aufgebracht ist.

Ein solcher im Stand der Technik zu findender Aufbau der bekannten Bauplatten hat u.a. den Nachteil, dass die Beschichtung mit eingebettetem Armierungsgewebe, die eine Dicke von 1 bis 1,5 mm aufweist, mit einfachen Werkzeugen nicht leicht zu bearbeiten und ein höheres Gewicht als praktisch gewünscht hat.

Aus der DE 3423006 C2 ist ein Verfahren zur Herstellung einer Bauplatte bekannt, die aus einem Schaumstoffteil mit beiderseits aufgeklebtem Gewebe oder Geflecht besteht, bei welchem das Gewebe oder Geflecht auf das Schaumstoffteil straff aufgespannt und mit einem wasserbeständigen Dünnbettmörtel verklebt und glattgestrichen wird.

Aus der DE 4234269 C1 ist ein Verfahren zur Herstellung von Bauplatten bekannt, die aus einem Schaumstoffkern und aus wenigstens auf eine der Flachseiten des Schaumstoffkerns aufgebrachtem Glasfasergewebe oder -vlies bestehen, das in einen aushärtenden zementhaltigen Mörtel eingebettet wird.

Aus der DE 102011013739 ist eine Bauplatte bekannt, die aus einem Schaumstoffkern und aus einer mindestens eine Seite des Kerns vollflächig abdeckenden Beschichtung mit eingelassenen Armierungskomponenten besteht, wobei die Beschichtung eine tiefenplastisch gestaltete Oberflächenstruktur aufweist, um die Haftzugfestigkeit eines Klebers an der Bauplatte zu verbessern.

Aus der EP 2758610 B1 ist ein Verfahren zur Herstellung von Bauplatten bekannt, die aus einem plattenförmigem Kern, der mit einem mit Nanozusatzstoffen modifizierten Mörtel beschichtet wird und aus Armierungskomponenten, die durch rhythmische Eindrücke in der Beschichtung eingebettet ist, bestehen.

Aus der DE 102011114001 A1 ist eine Bauplatte bekannt, die aus einem aufgeschäumten Kern besteht, der mit einem Mörtelmaterial mit eingelassener Armierung und Nanozusatzstoffen beschichtet wird.

Die zum Teil durchweg sehr anwendungsorientiert entwickelten Bauplatten haben sich in vielen Bereichen schon sehr bewährt, doch gibt es einen erkannten Bedarf nach einer Bauplatte mit geringerem Gewicht und erhöhten mechanischen Eigenschaften, die leichter zu bearbeiten und einfacher herzustellen ist.

Der Erfindung lag somit die Aufgabe zugrunde, eine Bauplatte der vorbezeichneten Gattung anzugeben, welche von geringem Gewicht ist, eine hohe mechanische Festigkeit aufweist und sich einfach bearbeiten lässt, insbesondere leicht und sauber zuschneidbar ist. Des Weiteren liegt der Erfindung die Aufgabe zugrunde, ein Verfahren zum Herstellen einer solchen Bauplatte aufzuzeigen.

Die Erfindung löst die Ihr zugrundeliegenden Aufgabe bei einer Bauplatte insbesondere mit den Merkmalen nach Anspruch 1. Insbesondere ist vorgesehen, dass das Armierungsgewebe miteinander verbundene Gewebefäden aufweist, welche jeweils offene Maschen ausbilden und die Gewebefäden des offenmaschigen Armierungsgewebes nur an der unmittelbaren Kontaktfläche der Gewebefäden mit der Oberfläche des Plattenkörpers mittels eines geeigneten Haftklebers verbunden sind, wobei die restlichen Flächenbereiche der Gewebefäden, die keinen Kontakt zur Oberfläche des Plattenkörpers haben, frei von Haftkleber und dazu eingerichtet sind, die Bauplattenoberfläche zu strukturieren.

Die Erfindung macht sich hierbei die Erkenntnis zu Nutze, dass durch das Vorsehen des Haftklebers zwischen den unmittelbaren Kontaktflächen der Oberfläche des Plattenkörpers und der Kontaktfläche der Gewebefäden des Armierungsgewebes die Menge an Haftkleber deutlich reduziert werden kann, wodurch zum einen die Masse der erfindungsgemäßen Bauplatte reduziert ist. Zudem lässt sich aufgrund des nicht im Haftkleber eingebetteten Armierungsgewebes das Armierungsgewebe selbst vereinfacht durchtrennen, wodurch die Bauplatte insgesamt vereinfacht bearbeitbar, insbesondere leichter und genauer zuschneidbar, ist. Trotz der deutlich verringerten Masse an Haftkleber weist eine derartig ausgebildete Bauplatte eine hohe mechanische Festigkeit auf. Darüber hinaus ist mittels der von Haftkleber freien Flächenbereichen der Gewebefäden des auf der Oberfläche der Bauplatte aufgebrachten Armierungsgewebes und dem zwischen den offenen Maschen des Armierungsgewebes freien Raum, der bis auf die Oberfläche des Plattenkörpers reicht, eine stärkere Struktur an der Oberfläche des Plattenkörpers erzeugt. Nachträglich auf die Oberfläche der Bauplatte aufzutragende Haft- bzw. Verbindungsmittel erzielen mit einer derartig erfindungsgemäß ausgebildeten Oberfläche der Bauplatte eine verbesserte Haftung. Insbesondere ist die Haftzugfestigkeit eines auf die Oberfläche der Bauplatte aufgebrachten Haftmittels im Vergleich zu einer Bauplatte mit einem an der Oberfläche eingebetteten Armierungsgewebe vergrößert. Unter einem Armierungsgewebe mit jeweils offenen Maschen ist vorliegend ein Gewebe zu verstehen, dessen Fäden eine vorbestimmte Ausrichtung aufweisen und jeweils so zueinander beabstandet sind, dass kein durchgängig geschlossenes Flächengebilde, wie beispielsweise bei einem Vlies, ausgebildet ist. Das Armierungsgewebe weist eine Vielzahl an "Löchern" auf, die bewirken, dass ein freier Raum zwischen den eine Masche begrenzenden, miteinander verbundenen Gewebefäden entsteht. Dieser freie Raum reicht jeweils bis auf die Oberfläche des darunter angeordneten Plattenkörpers. Ein auf eine derartig strukturierte Oberfläche aufzutragender Putz oder Fliesenkleber findet somit optimale Haftbedingungen vor. Die Maschen des offenmaschigen Armierungsgewebes werden vorzugsweise aus verschiedenen miteinander verbundenen Gewebefäden bzw. aus verschiedenen Gewebefäden-Abschnitte gebildet, die nicht unmittelbar zueinander benachbart bzw. unmittelbar aufeinanderfolgend sind.

Vergleichsversuche zwischen der erfindungsgemäßen Bauplatte und den meistbekannten Bauplatten im Markt haben gezeigt, dass die Bauplatte vorzugsweise eine wesentlich höhere Biege- und Haftzugfestigkeit aufweist und ein bedeutend geringeres Gewicht hat. Das Schneiden der erfindungsgemäßen Bauplatte ist bedeutend leichter und sauberer. Es wird dabei kein Staub erzeugt, weshalb die erfindungsgemäße Bauplatte umweltfreundlicher ist.

Gemäß einer bevorzugten Weiterbildung der Erfindung sind die Gewebefäden des Armierungsgewebes mit einem die Gewebeeigenschaften verändernden, vorzugsweise die Haftung von Klebstoffen, Putzen oder Beschichtungen an den Fäden verbessernden oder die Alkalibeständigkeit oder das Brandverhalten beeinflussenden Materialien behandelt. Damit ist die Haftung von aufzutragenden Haft- bzw. Verbindungsmitteln weiter verbessert, wodurch die Haftzugfestigkeit an der Oberfläche der Bauplatte erhöht ist und damit ein ungewolltes Lösen des auf die Bauplatte aufzutragenden Putzes oder Klebers erschwert wird. Anstelle von unmittelbar die Gewebeeigenschaften verändernden Materialien können zusätzlich Materialien auf die Oberfläche der Bauplatte aufgebracht werden, welche die Oberflächeneigenschaft des durch die offenen Maschen zugänglichen Plattenkörpers weiter verbessern.

Als Armierungsgewebe bieten sich im Sinne der Erfindung unter anderem Carbon-, Nylon- oder Stahlnetze, Gewebe mit offenen Maschen, insbesondere aus organischen, anorganischen und/oder künstlichen Fäden und insbesondere Glasgittergewebe an. Vorzugsweise beträgt die Maschengröße des Armierungsgewebes von 2 bis 40 mm, besonders bevorzugt von 4 bis 10 mm. Das Gewicht der Armierungskomponenten liegt bevorzugt in einem Bereich zwischen 30 und 600 g/m², noch bevorzugter zwischen 60 und 200 g/m².

In einer bevorzugten Ausgestaltung der Erfindung verlaufen die Gewebefäden zu den Außenkanten der Bauplatte in einem Winkelbereich von 0 bis 10° bzw. 80 bis 90° oder einem Winkelbereich von 30 bis 60°. Bei einer Bauplatte, welche im Wesentlichen eine rechteckige Außenform aufweist, verlaufen die Gewebefäden des Armierungsgewebes bevorzugt senkrecht oder parallel zu den Außenkanten der Bauplatte. In einer alternativen Ausführungsform verlaufen die Gewebefäden des Armierungsgewebes jeweils zu den Außenkanten der Bauplatte in einem Winkel im Bereich zwischen 35 und 55° und somit bevorzugt schräg zu den jeweiligen Außenkanten des Plattenkörpers. In Abhängigkeit vom Verlauf der Gewebefäden auf der einen oder den beiden Oberflächen des Plattenkörpers weist die erfindungsgemäße Bauplatte bevorzugt an einen entsprechenden Anwendungsfall abgestimmte Festigkeitswerte, insbesondere Biegefestigkeit auf.

Gemäß einer Weiterbildung der Erfindung weisen die Gewebefäden eine Querschnittsform auf, ausgewählt aus der Liste kreisrund, oval, polygonal, vorzugsweise im Wesentlichen rechteckig. Bevorzugt weisen die Gewebefäden eine Querschnittsform auf, die zumindest über den Außenumfang zumindest einen ebenen oder abgeplatteten Bereich aufweist. Der Faden hat somit bevorzugt mindestens einen etwa parallel zur Oberfläche des Plattenkörpers verlaufenden Flächenbereich. Bevorzugt ist hier eine etwa rechteckige Querschnittsform der Gewebefäden. Bevorzugt weist jeder mit der Oberfläche des Plattenkörpers verbundene Gewebefaden eine Kontaktfläche auf, die in Abhängigkeit von der Querschnittsform im Verhältnis zur gesamten Oberfläche einen Flächenanteil von ungefähr 10 bis 35% aufweist.

Gemäß einer bevorzugten Ausführungsform besteht der Kern der hier vorgeschlagenen Bauplatte aus aufgeschäumtem Kunststoffmaterial, ausgesucht aus der Liste, umfassend: Polystyrolschaum, Polyurethanschaum, PVC-Schaum, Phenolschaum. Gemäß einer weiteren bevorzugten Ausführungsform kann der Kern aus einem aufgeschäumten mineralischen Material bestehen, ausgesucht aus der Liste umfassend Glasschaum und Steinschaum. Bevorzugt kann der Kern eine Dicke von 3 bis 200 mm, vorzugsweise 5 bis 50 mm aufweisen.

Da die Fäden des Armierungsgewebes nur an der unmittelbaren Kontaktfläche der Fäden mit der Oberfläche des Plattenkörpers verbunden sind und die damit verbundenen mechanischen Eigenschaften, wie die Stabilität sowie die Haftzugfestigkeit der Bauplatte (1) sehr von der Qualität des Verbunds zwischen den Armierungsgewebe und dem Plattenkörper abhängt, spielt die Qualität des Haftklebers (7) eine entscheidende Rolle für die Gesamtqualität der erfindungsgemäßen Bauplatte .

Als besonders bevorzugte Haftkleber werden Polymerhaftkleber auf der Basis von Epoxid-, Polyurethan-, PVC-, Acryl- und/oder Polyesterharz bzw. polymervergütetem Zementkleber verwendet, ohne hierauf beschränkt zu sein.

Der Haftkleber sollte gerade dick genug sein, um eine ausreichende Verklebung zwischen der unmittelbaren Kontaktfläche der Armierungsfäden und der Kernoberfläche zu gewährleisten, wobei jedoch vorzugsweise die restliche bzw. verbleibende Fadenoberfläche frei vom Haftkleber bleibt.

Der Haftkleber wird auf die gesamte Oberfläche des Plattenkörpers (2) aufgebracht, bevorzugt in einer Dicke von zwischen 0,05 bis 0,5 mm und weiter bevorzugt zwischen 0,1 bis 0,2 mm. Es ist aber aus ökonomischen Gründen denkbar, den Haftkleber nur an der unmittelbaren Kontaktfläche der Armierungsfäden (4) mit der Oberfläche des Plattenkörpers aufzutragen.

Der Haftkleber kann Additive und/oder Füllstoffe enthalten, um gewisse Eigenschaften, wie z.B. die Viskosität und/oder die Flammenhemmung und/oder die Haftung auf der Oberfläche des Plattenkörpers und den Verbund mit dem damit in Kontakt gebrachten Gewebefäden zu verbessern.

Die grobe Strukturierung der Bauplattenoberfläche durch die freiliegenden Gewebefadenoberflächen gewährleistet eine praktisch ausreichende Haftung der Fliesenkleber und Putze. Die freiliegenden Fadenoberflächen des Armierungsgewebes werden vollkommen eingebettet im Material der auf der Oberfläche der Bauplatte aufgebrachten Fliesenkleber und/oder Putze. Ein aufgebrachter Putz oder Fliesenkleber gelangt somit unmittelbar mit dem Armierungsgewebe in Kontakt. Vorzugsweise dient das Armierungsgewebe der Bauplatte gleichzeitig als Armierung für die aufgebrachten Putz- und Fliesenkleberschichten.

Die Haftung der Fliesenkleber oder Putze kann weiter verbessert werden, indem die Haftkleberschicht mit aufgestreutem Quarzsand, Splitt oder einem ähnlichen mineralischen Streugut, vorzugsweise in der Korngröße von 0,1 bis 0,5 mm, versehen wird.

Die Erfindung betrifft gemäß einem weiteren Aspekt eine Bauplatte, welche einen Plattenkörper mit zumindest einem Kern aus einem aufgeschäumten Material mit einer flächigen Vorderseite und einer der Vorderseite gegenüberliegenden flächigen Rückseite, und mindestens ein auf mindestens einer der Oberflächen von Vorder- bzw. Rückseite des Plattenkörpers aufgeklebtes Armierungsgewebe umfasst.

Die erfindungsgemäße Bauplatte löst die eingangs beschriebene Aufgabe, in dem das Armierungsgewebe miteinander verbundene Gewebefäden aufweist, welche jeweils offene Maschen ausbilden und die Gewebefäden des offenmaschigen Armierungsgewebes an der unmittelbaren Kontaktfläche der Gewebefäden mit der Oberfläche des Plattenkörpers mittels eines geeigneten Haftklebers verbunden sind, und die restlichen Flächenbereiche der Gewebefäden, die keinen Kontakt zur Oberfläche des Plattenkörpers haben, mit einer Haftkleber-Schicht überzogen sind und dazu eingerichtet sind, die Bauplattenoberfläche zu strukturieren. Der Erfindung liegt damit die Erkenntnis zugrunde, dass auch Armierungsgewebe, deren Gewebefäden vollumfänglich mit einem Haft-Kleber benetzt sind, durch die offenen Maschen an der Oberfläche der Bauplatte eine Strukturierung erzeugen, mit der im Gegensatz zu den bekannten Bauplatten die Haftung und damit die Haftzugfestigkeit von aufgetragenen Putzen oder Klebern entscheidend verbessert ist. Sowohl die Oberfläche des Plattenkörpers wie auch die gesamte Oberfläche der Gewebefäden können jeweils mit einem den Plattenkörper und die Gewebefäden miteinander verbindenden Haftkleber benetzt sein. Entscheidend ist hier, dass der Haftkleber als Verbindungsmittel zwischen Gewebefäden und Plattenkörper so dünn aufgetragen wird, dass die Maschen weiterhin offenmaschig bleiben und nicht durch den Haftkleber ausgefüllt werden. In einer Ausführungsform der erfindungsgemäßen Bauplatte, welche auch für den ersten Aspekt der Erfindung zutrifft, entspricht bevorzugt die Tiefe des freien Raumes zwischen den Gewebefäden einer Masche, ausgehend von der Oberseite der aufgebrachten Gewebefäden bis auf die Oberfläche des ggf. mit einem Haftkleber benetzten Plattenkörpers mindestens drei Viertel bis etwa dem ganzen Durchmesser bzw. Höhe der aufgebrachten Gewebefäden.

In einer Ausführungsform der Erfindung ist die vollständig mit dem Haftkleber benetzte Oberfläche der Gewebefäden mit einem die Hafteigenschaften des Klebers für damit in Kontakt bringbare weitere Klebermaterialien, Putze oder Beschichtungen verbessernden Materialien behandelt. Die für das erste Ausführungsbeispiel einer erfindungsgemäßen Bauplatte beschriebenen, bevorzugten Ausführungsformen bzw. Weiterbildungen sind zugleich auch bevorzugte Ausführungsformen der erfindungsgemäßen Bauplatte mit ihren Gewebefäden, die vollumfänglich an der Oberfläche mit einem Haftkleber benetzt sind, sofern diese sich nicht wiedersprechen sollten.

In einem weiteren Aspekt betrifft die Erfindung ein Verfahren zum Herstellen einer Bauplatte, insbesondere einer Bauplatte mit einem Armierungsgewebe. Das erfindungsgemäße Verfahren umfasst zumindest die Schritte:
- Herstellen oder Bereitstellen eines Plattenkörpers, der zumindest einen Kern aus einem aufgeschäumten Material aufweist;
- Aufbringen bzw. Auftragen eines Haftklebers auf zumindest Flächenbereiche von wenigstens einer der Oberflächen des Plattenkörpers, und/oder auf zumindest Flächenbereiche von Gewebefäden eines offene Maschen aufweisenden Armierungsgewebes (3), und
- Inkontaktbringen von Gewebefäden des offenmaschigen Armierungsgewebes mit den Flächenbereichen des Plattenkörpers, wobei nur ein unmittelbar einander zugewandten Flächenbereiche der Oberfläche des Plattenkörpers und des Gewebefadens über den Haftkleber verbunden werden und die restlichen Flächenbereiche der Gewebefäden frei von Haftkleber bleiben.

Die Erfindung betrifft in einem weiteren Aspekt ein Verfahren zum Herstellen einer Bauplatte, insbesondere einer Bauplatte mit einem Armierungsgewebe nach einem der vorstehend beschriebenen bevorzugten Ausführungsformen, wobei das Verfahren die Schritte umfasst,
- Herstellen oder Bereitstellen eines Plattenkörpers, der zumindest einen Kern aus einem aufgeschäumten Material aufweist;
- Aufbringen bzw. Auftragen eines Haftklebers auf zumindest Flächenbereiche von wenigstens einer der Oberflächen des Plattenkörpers und/oder auf die gesamte Oberfläche eines miteinander verbundene Gewebefäden aufweisenden und offene Maschen ausbildenden Armierungsgewebes, und
- Inkontaktbringen der Gewebefäden des offenmaschigen Armierungsgewebes mit den Flächenbereichen des Plattenkörpers, wobei die unmittelbar einander zugewandten Flächenbereiche der Oberfläche des Plattenkörpers und der Gewebefäden über den Haftkleber verbunden werden und die restlichen Flächenbereiche der Gewebefäden von Haftkleber-Schicht eingehüllt sind.

Hinsichtlich weiterer vorteilhafter Ausgestaltungen der vorgenannten erfindungsgemäßen Verfahren wird auf die obigen Ausführungen zu den erfindungsgemäßen Bauplatten Bezug genommen.

Die Erfindung wird im Folgenden anhand eines Ausführungsbeispiels einer erfindungsgemäßen Bauplatte unter Bezugnahme auf die beigefügten Figuren näher beschrieben. Hierbei zeigen:
- Fig. 1:: eine perspektivische Ansicht einer erfindungsgemäßen Bauplatte, und
- Fig. 2:: eine Detailansicht der Bauplatte nach Fig. 1 im Schnitt, und
- Fig. 3:: eine Detailansicht einer weiteren Ausführungsform einer erfindungsgemäßen Bauplatte im Schnitt.

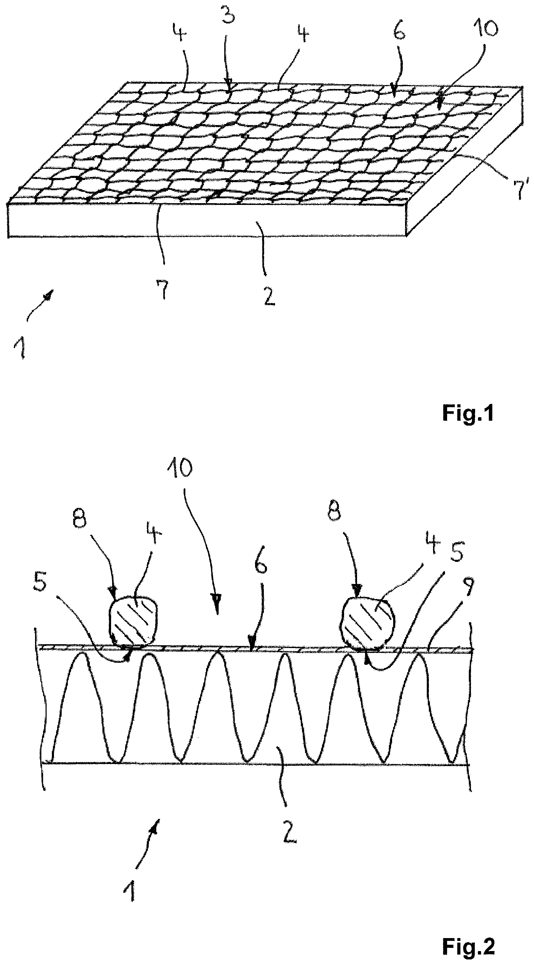

Fig. 1 zeigt eine Bauplatte 1 mit einem Plattenkörper 2, der einen Kern aus einem aufgeschäumten Material aufweist. In der gezeigten Ausführungsform wird der Plattenkörper vollständig aus dem Kern aus aufgeschäumtem Material ausgebildet. In einer nicht gezeigten Ausführungsform kann der Plattenkörper aus einem Kern aus aufgeschäumtem Material und aus mit dem Kern verbundenen Deckschichten bestehen.

Auf der Oberfläche 6 des Plattenkörpers 2, vorliegend auf der gezeigten Oberseite des Plattenkörpers 2, ist ein offenmaschiges Armierungsgewebe 3 befestigt, insbesondere aufgeklebt. Das Armierungsgewebe weist Gewebefäden 4 auf, die in einer vorbestimmten Ausrichtung zu den Außenkanten 7, 7' des Plattenkörpers 2 verlaufen. In der gezeigten Ausführungsform verlaufen die Gewebefäden in einem Winkel von etwa 0° bis 10° oder ungefähr 80° bis 90° zu den Außenkanten 7, 7'. Ferner bilden die Gewebefäden 4 offene Maschen auf der Oberseite des Plattenkörpers 2 aus. Zudem verlaufen die Gewebefäden 4 in Abständen zueinander. Die Maschen bilden "Löcher" oder einen "freien Raum" 10, der seitlich von den Gewebefäden 4 einer jeweiligen Masche begrenzt wird, wodurch die offenen Maschen des Armierungsgewebes 3 definiert werden.

Das Armierungsgewebe 3 mit seinen Gewebefäden 4 ist über einen Haftkleber 9 mit der Oberfläche des Plattenkörpers 2 verbunden. Vorliegend ist nur die der Oberfläche des Plattenkörpers 2 zugewandte Kontaktfläche 5 der Gewebefäden 4 (Fig. 2) mit der Oberfläche 6 des Plattenkörpers 2 verbunden ist. Die verbleibenden Flächenbereiche 8 der Gewebefäden 4 haben keinen Kontakt zur Oberfläche des Plattenkörpers und sind daher frei von Haftkleber. Darüber ist eine verbesserte Struktur der Bauplattenoberfläche bewirkt.

Fig. 2 zeigt eine Detailansicht der erfindungsgemäßen Bauplatte 1 im Schnitt, welche die Verbindung zwischen dem Plattenkörper 2 und den Fäden 4 des Armierungsgewebes 3 im Detail darstellt. In der vorliegenden Ausführungsform ist der Plattenkörper 2 vollständig aus dem Kern aus aufgeschäumtem Material ausgebildet. Auf der Oberfläche 6, hier als Oberseite des Plattenkörpers 2 dargestellt, wird der Haftkleber 9 in der gezeigten Ausführungsform vollflächig auf die Oberfläche des Plattenkörpers 2 aufgetragen. Anschließend wird das Armierungsgewebe 3 mit seinen Gewebefäden 4 so mit der Oberfläche des Plattenkörpers 2 in Kontakt gebracht, dass nur die Kontaktfläche 5 der Gewebefäden 4 mit dem Haftkleber 9 eine Stoffschlussverbindung eingeht. Alternativ oder optional wird der Haftkleber auf zumindest Flächenbereiche der Gewebefäden des offene Maschen aufweisenden Armierungsgewebes aufgebracht oder aufgetragen, die der Oberfläche des Plattenkörpers 2 zugewandt sind.

Die verbleibenden Flächenbereiche 8 der Gewebefäden 4 haben keinen Kontakt zur Oberfläche 6 des Plattenkörpers 2 und damit bleiben diese frei von Haftkleber. Zudem bleiben auch die Zwischenräume zwischen den Gewebefäden 4 nahezu frei von Haftkleber 9, so dass ein "freier Raum" 10 für die gewünschte Struktur der Oberfläche an der Bauplatte 1 ausgebildet ist. In der gezeigten Ausführungsform weisen die Gewebefäden einen Querschnitt auf, der im Wesentlichen rechteckig ist. Die verwendeten Fäden des Armierungsgewebes haben einen Querschnitt der zumindest in einem Umfangsbereich des Fadens eine abgeplattete Kontaktfläche 5 aufweist, die bevorzugt etwa parallel zur Oberfläche 6 des Plattenkörpers 2 verlaufende Flächenbereiche hat.

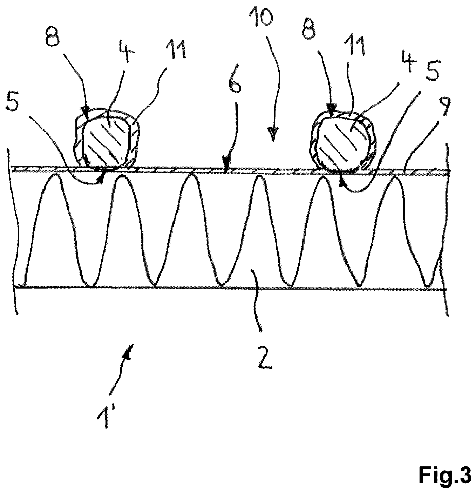

Fig. 3 zeigt eine Detailansicht einer erfindungsgemäßen Bauplatte 1' im Schnitt, welche einen Plattenkörper 2 aufweist, der in der vorliegenden Ausführungsform ebenfalls aus einem Kern aus aufgeschäumtem Material ausgebildet ist. Auf der Oberfläche 6, hier wiederum als Oberseite des Plattenkörpers 2 dargestellt, wird der Haftkleber 9 in der gezeigten Ausführungsform ebenfalls vollflächig auf die Oberfläche des Plattenkörpers 2 aufgetragen. Darüber hinaus werden die Gewebefäden 4 des offene Maschen aufweisenden Armierungsgewebes 3 vollumfänglich mit dem Haftkleber benetzt bzw. der Haftkleber darauf aufgetragen und dann das offenmaschige Armierungsgewebe 3 mit der Oberfläche des Plattenkörpers 2 in Kontakt gebracht. Darüber wird gewährleistet, dass zwischen den Gewebefäden 4 einer offenen Masche ein "freier Raum" 10 erhalten bleibt, der der Oberfläche der Bauplatte 1' die gewünschte Struktur an der Oberfläche der Bauplatte 1' bewirkt. Der um die Gewebefäden 4 des Armierungsgewebes 3 herum aufgetragene Haftkleber bildet eine Haftkleber-Schicht 11, welche eine Schichtdicke aufweist, die geringer ist als der Durchmesser der Gewebefäden, bevorzugt kleiner ist als der halbe Durchmesser der Gewebefäden 4. Besonders bevorzugt entspricht, wie in Fig. 3 dargestellt, die Schichtdicke der Haftkleber-Schicht 11 weniger als ein Viertel dem Durchmesser bzw. Höhe der Gewebefäden des offenmaschigen Armierungsgewebes 3.

## Patentansprüche

1. Bauplatte (1), umfassend:
- einen Plattenkörper (2) mit zumindest einem Kern aus einem aufgeschäumten Material mit einer flächigen Vorderseite und einer der Vorderseite gegenüberliegenden flächigen Rückseite und
- mindestens ein auf mindestens einer der Oberflächen (6) von Vorder- bzw. Rückseite des Plattenkörpers (2) aufgeklebtes Armierungsgewebe (3),
**dadurch gekennzeichnet ist, dass**
das Armierungsgewebe (3) miteinander verbundene Gewebefäden (4) aufweist, welche jeweils offene Maschen ausbilden und die Gewebefäden (4) des offenmaschigen Armierungsgewebes (3) nur an der unmittelbaren Kontaktfläche (5) der Gewebefäden (4) mit der Oberfläche (6) des Plattenkörpers (2) mittels eines geeigneten Haftklebers (9) verbunden sind, wobei die restlichen Flächenbereiche (8) der Gewebefäden (4), die keinen Kontakt zur Oberfläche (6) des Plattenkörpers (2) haben, frei von Haftkleber (9) und dazu eingerichtet sind, die Bauplattenoberfläche zu strukturieren.

2. Bauplatte (1) nach Anspruch 1,
**dadurch gekennzeichnet, dass** die Gewebefäden (4) des Armierungsgewebes (3) mit einem die Gewebeeigenschaften der Fäden verändernden, vorzugsweise die Haftung von Klebstoffen, Putzen oder Beschichtungen an den Fäden verbessernden oder die Alkalibeständigkeit oder das Brandverhalten beeinflussenden Materialien behandelt sind.

3. Bauplatte (1) nach einem der Ansprüche 1 oder 2,
**dadurch gekennzeichnet, dass** das Armierungsgewebe (3) bevorzugt aus Carbon-, Nylon- oder Stahlnetzen, Geweben aus organischen, anorganischen und/oder künstlichen Gewebefäden (4), und besonders bevorzugt aus alkalibeständigem Glasgittergewebe bestehen.

4. Bauplatte (1) nach einem der Ansprüche 1 bis 3,
**dadurch gekennzeichnet, dass** die Gewebefäden (4) zu den Außenkanten der Bauplatte in einem Winkelbereich von 0 bis 10 Grad bzw. 80 bis 90 Grad oder einem Winkelbereich von 35 bis 55 Grad verlaufen, und/oder
die Gewebefäden (4) eine Querschnittsform aufweisen, ausgewählt aus der Liste, kreisrund; oval; polygonal, vorzugsweise im Wesentlichen rechteckig.

5. Bauplatte (1) nach einem der Ansprüche 1 bis 4,
**dadurch gekennzeichnet, dass** die Kontaktfläche eines jeweiligen Gewebefadens (4) im Verhältnis zu gesamten Oberfläche des Gewebefadens (4) einen Flächenanteil im Bereich von etwa 10 bis etwa 35 % aufweist.

6. Bauplatte (1) nach einem der vorhergehenden Ansprüche,
**dadurch gekennzeichnet, dass** das Armierungsgewebe (3) Maschen mit einer Maschengröße von 2 bis 40 mm und besonders bevorzugt von 4 bis 10 mm aufweist, und/oder das Armierungsgewebe (3) ein Gewicht in einem Bereich von etwa 30 bis 600 g/m² und bevorzugt von 60 bis 200 g/m² liegt.

7. Bauplatte (1) nach einem der vorhergehenden Ansprüche,
**dadurch gekennzeichnet, dass** der Kern des Plattenkörpers (2) aus einem aufgeschäumten Kunststoffmaterial besteht, ausgesucht aus der Liste, umfassend Polystyrolschaum, Polyurethanschaum, PVC-Schaum, Phenolschaum, oder
der Kern des Plattenkörpers (2) aus einem aufgeschäumten mineralischen Material besteht, ausgesucht aus der Liste, umfassend Glasschaum, Steinschaum.

8. Bauplatte (1) nach einem der vorhergehenden Ansprüche,
**dadurch gekennzeichnet, dass** die Dicke des Kerns (2) in einem Bereich zwischen 3 und 200 mm und bevorzugt zwischen 4 und 50 mm liegt.

9. Bauplatte (1) nach einem der vorhergehenden Ansprüche,
**dadurch gekennzeichnet, dass** der Haftkleber (9) bevorzugt auf der Basis von Epoxid-, Polyurethan-, PVC-, Acryl- und/oder Polyesterharz bzw. polymervergüteter Zementkleber sein kann, ohne hierauf beschränkt zu sein.

10. Bauplatte (1) nach einem der vorhergehenden Ansprüche,
**dadurch gekennzeichnet, dass** die Schichtdicke des Haftklebers (9) bevorzugt zwischen 0,05 bis 0,5 mm und weiter bevorzugt zwischen 0,1 bis 0,2 mm liegt.

11. Bauplatte (1) nach einem der vorhergehenden Ansprüche,
**dadurch gekennzeichnet, dass** der Haftkleber (9) bevorzugt auf die gesamte Oberfläche (6) des Plattenkörpers (2), und weiter bevorzugt, nur an der unmittelbaren Kontaktfläche (5) zwischen den Gewebefäden (4) und der Oberfläche (6) des Plattenkörpers (2) aufgebracht wird.

12. Bauplatte (1) nach einem der vorhergehenden Ansprüche,
**dadurch gekennzeichnet, dass** die Oberfläche der Haftkleberschicht (9) mit Quarzsand, Splitt oder einem ähnlichen mineralischen Streugut, vorzugsweise in der Korngröße von 0,1 bis 0,5 mm, versehen wird.

13. Bauplatte (1), umfassend:
- einen Plattenkörper (2) mit zumindest einem Kern aus einem aufgeschäumten Material mit einer flächigen Vorderseite und einer der Vorderseite gegenüberliegenden flächigen Rückseite, und
- mindestens ein auf mindestens einer der Oberflächen (6) von Vorder- bzw. Rückseite des Plattenkörpers (2) aufgeklebtes Armierungsgewebe (3),
**dadurch gekennzeichnet ist, dass**
das Armierungsgewebe (3) miteinander verbundene Gewebefäden (4) aufweist, welche jeweils offene Maschen ausbilden und die Gewebefäden (4) des offenmaschigen Armierungsgewebes (3) an der unmittelbaren Kontaktfläche (5) der Gewebefäden (4) mit der Oberfläche (6) des Plattenkörpers (2) mittels eines geeigneten Haftklebers (9) verbunden sind, und die restlichen Flächenbereiche (8) der Gewebefäden (4), die keinen Kontakt zur Oberfläche (6) des Plattenkörpers (2) haben, mit einer Haftkleber-Schicht (11) überzogen sind, und dazu eingerichtet sind, die Bauplattenoberfläche zu strukturieren.

14. Verfahren zum Herstellen einer Bauplatte, insbesondere einer Bauplatte mit einem Armierungsgewebe nach einem der Ansprüche 1 bis 12,
- Herstellen oder Bereitstellen eines Plattenkörpers (2), der zumindest einen Kern aus einem aufgeschäumten Material aufweist;
- Aufbringen bzw. Auftragen eines Haftklebers (7) auf zumindest Flächenbereiche von wenigstens einer der Oberflächen des Plattenkörpers (2) und/oder auf zumindest Flächenbereiche von Gewebefäden (4) eines offene Maschen aufweisenden Armierungsgewebes (3), und
- Inkontaktbringen von den Gewebefäden (4) des offenmaschigen Armierungsgewebes (3) mit den Flächenbereichen des Plattenkörpers (2), wobei nur die unmittelbar einander zugewandten Flächenbereiche der Oberfläche (6) des Plattenkörpers und der Gewebefäden (4) über den Haftkleber (7) verbunden werden und die restlichen Flächenbereiche der Gewebefäden frei von Haftkleber bleiben.

15. Verfahren zum Herstellen einer Bauplatte, insbesondere einer Bauplatte mit einem Armierungsgewebe nach einem der Ansprüche 1 bis 12,
- Herstellen oder Bereitstellen eines Plattenkörpers (2), der zumindest einen Kern aus einem aufgeschäumten Material aufweist;
- Aufbringen bzw. Auftragen eines Haftklebers (7) auf zumindest Flächenbereiche von wenigstens einer der Oberflächen des Plattenkörpers (2) und/oder auf die gesamte Oberfläche eines miteinander verbundene Gewebefäden (4) aufweisenden und offene Maschen ausbildenden Armierungsgewebes (3), und
- Inkontaktbringen der Gewebefäden (4) des offenmaschigen Armierungsgewebes (3) mit den Flächenbereichen des Plattenkörpers (2), wobei die unmittelbar einander zugewandten Flächenbereiche der Oberfläche (6) des Plattenkörpers und der Gewebefäden (4) über den Haftkleber (7) verbunden werden und die restlichen Flächenbereiche der Gewebefäden durch eine Haftkleber-Schicht (11) eingehüllt sind.
